# EUROPEAN PATENT SPECIFICATION

(11) **EP 4 086 905 B1**
(45) Date of publication and mention of the grant of the patent: **13.12.2023**
(21) Application number: 22159459.1
(22) Date of filing: 01.03.2022
(51) Int. Cl.: G10L 25/87, G10L 15/25

(54) **VOICE ACTIVITY DETECTION METHOD AND APPARATUS, ELECTRONIC DEVICE AND STORAGE MEDIUM**
VERFAHREN UND VORRICHTUNG ZUR ERKENNUNG DER SPRACHAKTIVITÄT, ELEKTRONISCHE VORRICHTUNG UND SPEICHERMEDIUM
PROCÉDÉ ET APPAREIL D'ACTIVITÉ VOCALE, DISPOSITIF ÉLECTRONIQUE ET SUPPORT D'ENREGISTREMENT

(30) Priority: 08.05.2021 CN 202110502922
(43) Date of publication of application: 09.11.2022
(73) Proprietor: BEIJING BAIDU NETCOM SCIENCE TECHNOLOGY CO., LTD., Beijing, Beijing 100085 (CN)
(72) Inventor: GUO, Qihang, Beijing, 100085 (CN); XU, Renxin, Beijing, 100085 (CN); DAI, Ning, Beijing, 100085 (CN)
(74) Representative: dompatent von Kreisler Selting Werner - Partnerschaft von Patent- und Rechtsanwälten mbB

(56) References cited:
- CN-A- 111 048 066
- CN-A- 112 397 093
- US-A- 5 884 257

## Description

### Field of the Disclosure

The present disclosure relates to the field of artificial intelligence technologies, and particularly to a voice activity detection method and apparatus, an electronic device and a storage medium in the fields of deep learning, intelligent voices, or the like.

### Background of the Disclosure

In recent years, applications of human-machine interaction products are more and more popular; for example, the human-machine interaction products may be often found in places, such as bank halls, department stores, hospitals, or the like.

In order to perform an accurate voice interaction, voice activity detection (VAD) is usually required to be performed on collected voice data, and accuracy of a voice activity detection result directly affects a success rate of the human-machine interaction, or the like.

Currently, a voice detection model obtained by a training operation is usually used to perform the voice activity detection (i.e., detection of a voice start point and a voice end point) on the voice data. However, under a complex noise environment, especially when noise is ambient voices (background voices), this method usually has a poor detection result; that is, the accuracy of the detection result is not high.

CN112397093A, published on February 23, 2021, entitled "Voice detection method and device", describes a method for obtaining a start point and an end point of effective speech in the audio signal based on a first probability that the audio frames are effective voice and a second probability that a person is present in the image frame for voice activity, and by combining the time sequence of the audio frame.

### Summary of the Disclosure

It is an object of the invention to overcome the shortcomings in the prior art. This object of the invention is solved by the independent claims. Specific embodiments are defined in the dependent claims.

### Brief Description of Drawings

The drawings are used for better understanding the present solution and do not constitute a limitation of the present disclosure. In the drawings,
Fig. 1 is a flow chart of a method for voice activity detection according to an embodiment of the present disclosure;
Fig. 2 is a schematic position diagram of each key point corresponding to first detection according to the present disclosure;
Fig. 3 is a schematic position diagram of each key point shown in Fig. 2;
Fig. 4 is a schematic diagram of a way of switching between a voiced state and a voiceless state according to the present disclosure;
Fig. 5 is a schematic diagram of a way of switching between a lip movement state and a lip-movement-free state according to the present disclosure;
Fig. 6 is a schematic diagram of an overall implementation process of the method for voice activity detection according to the present disclosure;
Fig. 7 is a schematic structural diagram of an apparatus 700 for voice activity detection according to an embodiment of the present disclosure; and
Fig. 8 shows a schematic block diagram of an exemplary electronic device 800 which may be configured to implement the embodiment of the present disclosure.

### Detailed Description of Preferred Embodiments

The following part will illustrate exemplary embodiments of the present disclosure with reference to the drawings, including various details of the embodiments of the present disclosure for a better understanding. The embodiments should be regarded only as exemplary ones. For clarity and conciseness, the descriptions of the known functions and structures are omitted in the descriptions below.

In addition, it should be understood that the term "and/or" only describes an association relationship between associated objects, and indicates that three relationships may exist. For example, A and/or B may indicate three cases: only A exists; both A and B exist; and only B exists. In addition, in this specification, the symbol "j" generally indicates that associated objects have a relationship of "or".

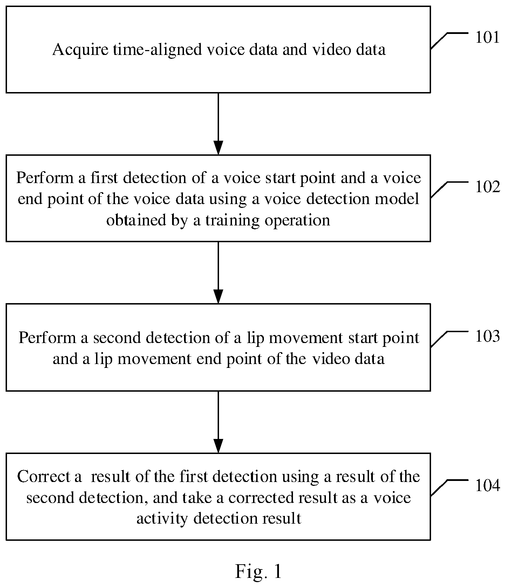

Fig. 1 is a flow chart of a method for voice activity detection according to an embodiment of the present disclosure. As shown in Fig. 1, the method includes the following implementation steps:
step 101: acquiring time-aligned voice data and video data;
step 102: performing a first detection of a voice start point (vad_begin) and a voice end point (vad_end) of the voice data using a voice detection model obtained by a training operation;
step 103: performing a second detection of a lip movement start point (lip_begin) and a lip movement end point (lip_end) of the video data; and
step 104: correcting a result of the first detection using a result of the second detection result, and taking a corrected result as a voice activity detection result.

It is observed that, in the solution of the above-mentioned method embodiment, the voice detection model and a lip movement detection technology are combined, and the voice start point and the voice end point detected by the voice detection model are corrected using the lip movement detection result, thereby improving accuracy of the voice activity detection result, or the like.

In practical applications, a human-machine interaction product with a photographic apparatus (for example, a camera) may be used to collect the voice data and the video data for a same scenario; for example, when a user a performs a voice conversation with the human-machine interaction product, the voice data and the video data of the user a may be collected respectively.

The collected voice data and video data may be aligned in time. The voice data and the video data may be processed differently; the first detection of the voice start point and the voice end point of the voice data may be performed using the voice detection model obtained by the training operation, and the second detection of the lip movement start point and the lip movement end point of the video data may be performed.

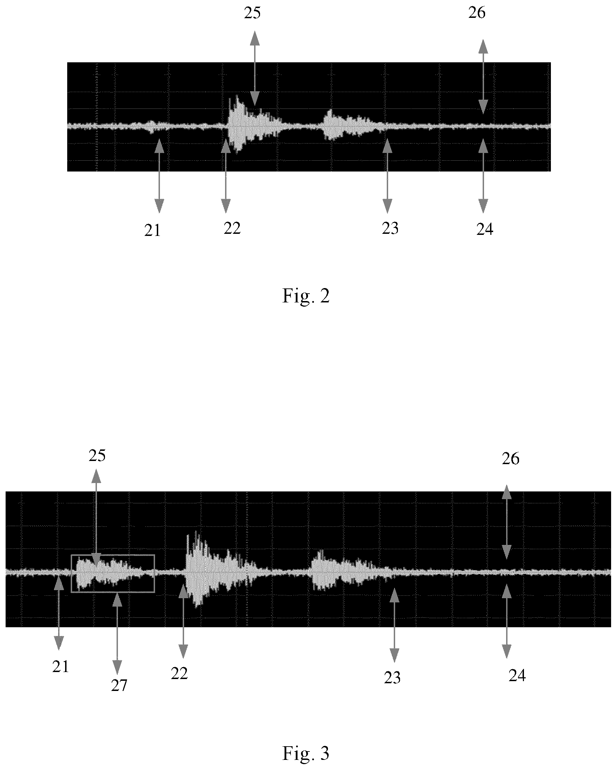

Away of performing the first detection is a prior art. Fig. 2 is a schematic position diagram of each key point corresponding to the first detection according to the present disclosure.

As shown in Fig. 2, 21 denotes the voice start point, 22 denotes a real voice start point (speech_begin), 23 denotes a real voice end point (speech_end), 24 denotes the voice end point, 25 denotes a time/moment (T_vad_begin_detected) when the voice start point is detected, and 26 denotes a time (T_vad_end_detected) when the voice end point is detected; the voice start point and the voice end point represent a voice start point and a voice end point detected using the voice detection model; the detected voice start point is usually earlier than the real voice start point by 300 ms to 500 ms, and if the time interval is greater than this value, more invalid voices are introduced, thereby increasing an interaction delay, or the like; the detected voice end point is usually later than the real voice end point by 600 ms to 800 ms, if the time interval is less than this value, an erroneous judgment tends to be caused, resulting in early truncation, and if the time interval is greater than this value, the invalid voices are increased, resulting in the increase of the interaction delay, or the like.

As shown in Fig. 2, in practical applications, since in order to guarantee the accuracy of the detection result, voices in a period of time are required to be accumulated for continuous analysis, so as to finally determine the voice start point to avoid mistaking sudden noise in a short time as a voice, or the like, the time when the voice start point is detected is usually later than the real voice start point by about 200 ms. The voice data at a time obtained by backing the time when the voice start point is detected by 500 to 700 (300+200 to 500+200) ms is output as the detected voice start point. In addition, the detected voice end point may be output at the time when the voice end point is detected.

It is assumed that noise exists at a head of the voice data and is an ambient voice, and Fig. 3 is a schematic position diagram of each key point shown in Fig. 2. As shown in Fig. 3, 21 to 26 have same meanings as those shown in Fig. 2, and 27 denotes noise. It is observed that after the voice start point and the voice end point are obtained by the first detection, the ambient voice noise is introduced into the head, and then, when the voice data between the voice start point and the voice end point is subsequently sent to a recognition engine for recognition, a recognition error is likely to be caused, thus affecting a success rate of a human-machine interaction, or the like.

Therefore, the lip movement detection technology is introduced in the solution of the present disclosure, and besides the first detection of the voice start point and the voice end point of the voice data utilizing the voice detection model, the second detection of the lip movement start point and the lip movement end point of the video data is performed.

In an embodiment of the present disclosure, the second detection may be performed on the video data using a lip movement detection model obtained by a training operation, so as to obtain the lip movement start point and the lip movement end point of the face in a video.

There is no limitation on a way of performing the training operation to obtain the lip movement detection model. For example, a face picture in each picture frame in the video data may be captured using a face detection technology, or the like; generally speaking, each picture frame only includes one face picture, lip points of the face lips in each face picture may be extracted, each face picture may be labeled, the face picture with the moving lips is labeled with 1, the face picture without the moving lips is labeled with 0, and then, the lip movement detection model may be trained using the lip points of each face picture and a corresponding labeling result.

During the second detection, lip points may be obtained in the same way and input into the lip movement detection model, so as to obtain the output detection result of 1 or 0 which indicates whether the face lips in the face picture move or not.

Generally speaking, at least 5 picture frames are required to determine the lip movement start point, which is similar to the processing way in the first detection, and also has a purpose of preventing the misjudgment; that is, a lip movement lasting for a period of time is considered to be a real lip movement (i.e., a lip movement caused by speaking), thus preventing a detection error caused by a short-time lip movement due to other reasons.

Therefore, the time (T_lip_begin_detected) when the lip movement start point is detected has a certain delay compared with the lip movement start point, and with the aforementioned 5 frames as an example, if a frame rate is 20, the delay is 250 ms, and the lip movement start point may be obtained by a backing operation.

In this way, the lip movement start point and the lip movement end point may be accurately and efficiently detected, thereby laying a good foundation for a subsequent processing operation, or the like.

The obtained first detection result may be corrected using the obtained second detection result.

To this end, several states, such as a voice detection state and a lip movement detection state, may be predefined, the voice detection state may further include a voiced state (state_vad_speech) and a voiceless state (state_vad_no_speech), and the lip movement detection state may further include a lip movement state (state_lip) and a lip-movement-free state (state_no_lip).

The states are as follows:
A. voiced state: a state in a time after the voice start point is detected and before the corresponding voice end point is detected;
B. voiceless state: a state in a time other than the voiced state, i.e., a state in a time before the voice start point is detected and after the voice end point is detected;
C. lip movement state: a state in a time after the lip movement start point is detected and before the corresponding lip movement end point is detected; and
D. lip-movement-free state: a state in a time other than the lip movement state, i.e., a state in a time before the lip movement start point is detected and after the lip movement end point is detected.

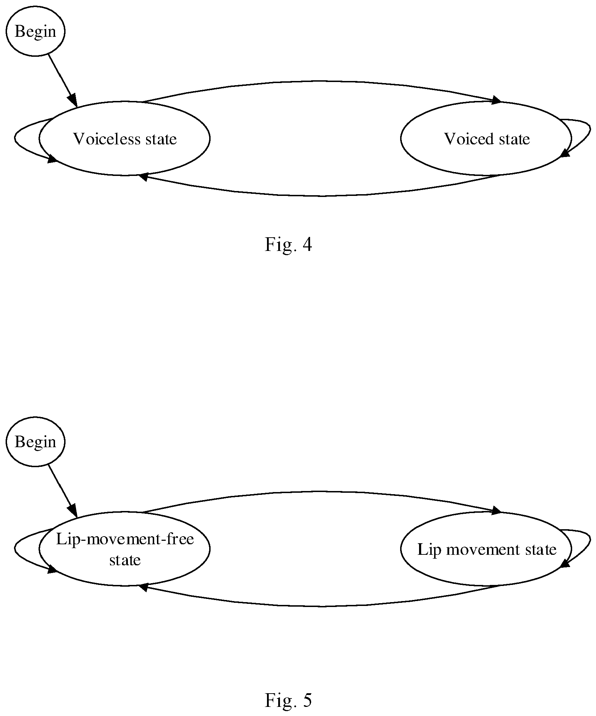

Fig. 4 is a schematic diagram of a way of switching between the voiced state and the voiceless state according to the present disclosure. As shown in Fig. 4, when the voice start point is detected, a state is switched from the voiceless state to the voiced state, and when the voice end point is detected, the state is switched from the voiced state to the voiceless state.

Fig. 5 is a schematic diagram of a way of switching between the lip movement state and the lip-movement-free state according to the present disclosure. As shown in Fig. 5, when the lip movement start point is detected, a state is switched from the lip-movement-free state to the lip movement state, and when the lip movement end point is detected, the state is switched from the lip movement state to the lip-movement-free state.

In an embodiment of the present disclosure, when the first detection result is corrected using the second detection result, the following processing methods may be adopted:
1) when the voice detection state is the voiced state and the lip movement detection state is the lip-movement-free state, if the lip movement start point is detected and meets a predefined time requirement, the detected lip movement start point may be used as a determined voice end point and a new voice start point; and
2) when the voice detection state is the voiced state and the lip movement detection state is the lip movement state, if the lip movement end point is detected, the detected lip movement end point may be used as the determined voice end point and the new voice start point.

In the method 1), when the voice detection state is the voiced state and the lip movement detection state is the lip-movement-free state, if the lip movement start point is detected, whether the lip movement start point meets the predefined time requirement may be further determined; in an embodiment of the present disclosure, a difference between the time when the lip movement start point is detected and the time when the voice start point (i.e., the voice start point corresponding to the current voiced state) is last detected is greater than a predefined threshold may be determined, if yes, the lip movement start point may be determined to meet the predefined time requirement, and correspondingly, the detected lip movement start point may be used as the determined voice end point and the new voice start point.

That is, forced segmentation may be performed, and the detected lip movement start point is used as the voice end point corresponding to the last detected voice start point and the new voice start point.

Generally speaking, the voice data between the last detected voice start point and the corresponding voice end point obtained after the processing operation using the above-mentioned method is the noise occurring before the voice for the human-machine interaction, which is equivalent to segmentation of the noise and the voice for the human-machine interaction, and the voice start point is re-determined, thereby improving the accuracy of the detection result of the voice start point, or the like.

In addition, since the lip movement start point is detected, the lip movement detection state is switched from the lip-movement-free state to the lip movement state.

In the method 2), when the voice detection state is the voiced state and the lip movement detection state is the lip movement state, if the lip movement end point is detected, the detected lip movement end point may be used as the determined voice end point and the new voice start point.

That is, forced segmentation may be performed, and the detected lip movement end point is used as the voice end point corresponding to the newly obtained voice start point and the new voice start point.

Generally speaking, the voice data between the newest voice start point and the corresponding voice end point obtained after the processing operation using the above-mentioned method is the voice for the human-machine interaction, which is equivalent to the segmentation of the noise and the voice for the human-machine interaction, and the voice end point is re-determined, thereby improving the accuracy of the detection result of the voice end point, or the like.

Using the processing operations in the methods 1) and 2), the detected voice start point and voice end point are corrected by means of the lip movement detection, such that the head noise and end noise may be removed, thereby improving the accuracy of the voice activity detection result, or the like.

In the solution of the present disclosure, the existence of the second detection does not affect normal execution of the first detection; that is, the detection of the voice start point and the voice end point may be performed according to the existing method, and the voice detection state may be determined according to the detected voice start point and voice end point, and only from the perspective of external output, the first detection result may be corrected using the second detection result.

In an embodiment of the present disclosure, if the face lips in the video are determined not to be occluded, the second detection of the lip movement start point and the lip movement end point of the video data may be performed.

That is, when the face lips in the video are determined to be occluded, for example, due to wear of a mask, the second detection may not be performed; that is, only the first detection is performed, and the first detection result is used as the voice activity detection result, thereby well incorporating the existing implementation, flexibly coping with various possible situations, and guaranteeing a sequential proceeding effect of the man-machine interaction, or the like.

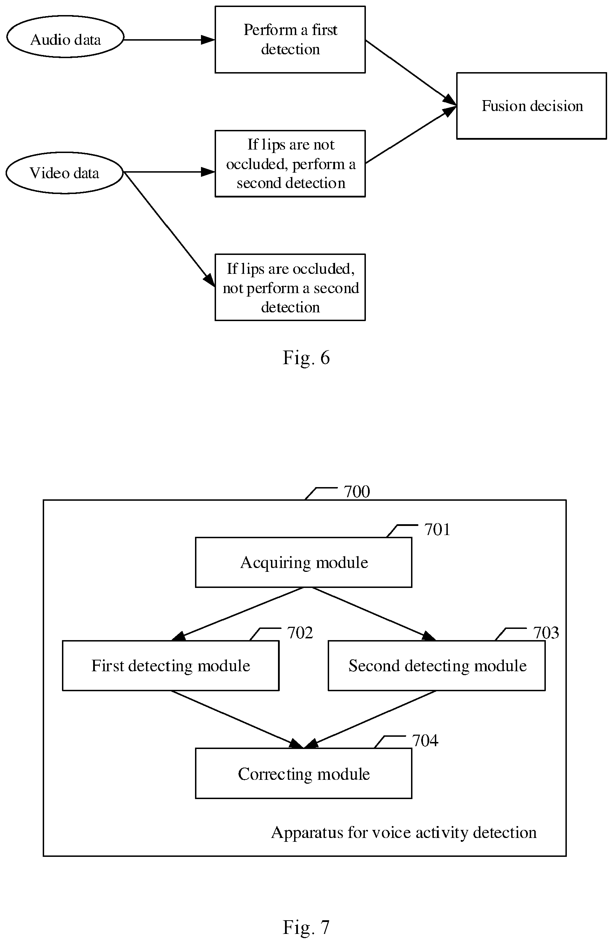

In combination with the above introduction, Fig. 6 is a schematic diagram of an overall implementation process of the method for voice activity detection according to the present disclosure. As shown in Fig. 6, "fusion decision" refers to the correction of the first detection result using the second detection result, and for the specific implementation of each step, reference is made to the foregoing related description, and details are not repeated.

It should be noted that for simplicity of description, the above-mentioned embodiment of the method is described as combinations of a series of acts, but those skilled in the art should understand that the present disclosure is not limited by the described order of acts, as some steps may be performed in other orders or simultaneously according to the present disclosure. Further, those skilled in the art should also understand that the embodiments described in this specification are preferred embodiments and that acts and modules referred to are not necessary for the present disclosure.

The above is a description of an embodiment of the method, and an embodiment of an apparatus according to the present disclosure will be further described below.

Fig. 7 is a schematic structural diagram of an apparatus 700 for voice activity detection according to an embodiment of the present disclosure. As shown in Fig. 7, the apparatus 700 for voice activity detection includes:
an acquiring module 701 configured to acquire time-aligned voice data and video data;
a first detecting module 702 configured to perform a first detection of a voice start point and a voice end point of the voice data using a voice detection model obtained by a training operation;
a second detecting module 703 configured to perform a second detection of a lip movement start point and a lip movement end point of the video data; and
a correcting module 704 configured to correct a result of the first detection using a result of the second detection, and take a corrected result as a voice activity detection result.

The acquired voice data and video data may be processed differently; the first detecting module 702 may perform the first detection of the voice start point and the voice end point of the voice data using the voice detection model obtained by the training operation, and the second detecting module 703 may perform the second detection of the lip movement start point and the lip movement end point of the video data. That is, the lip movement detection technology is introduced, and besides the first detection of the voice start point and the voice end point of the voice data utilizing the voice detection model, the second detection of the lip movement start point and the lip movement end point of the video data is performed.

In an embodiment of the present disclosure, the second detecting module 703 may perform the second detection on the video data using a lip movement detection model obtained by a training operation, so as to obtain the lip movement start point and the lip movement end point of the face in a video.

There is no limitation on a way of performing the training operation to obtain the lip movement detection model. For example, a face picture in each picture frame in the video data may be captured using a face detection technology, or the like; generally speaking, each picture frame only includes one face picture, lip points of the face lips in each face picture may be extracted, each face picture may be labeled, the face picture with the moving lips is labeled with 1, the face picture without the moving lips is labeled with 0, and then, the lip movement detection model may be trained using the lip points of each face picture and a corresponding labeling result.

During the second detection, lip points may be obtained in the same way and input into the lip movement detection model, so as to obtain the output detection result of 1 or 0 which indicates whether the face lips in the face picture move or not.

Further, the correcting module 704 may correct the first detection result using the second detection result to obtain the desired voice activity detection result.

To this end, several states, such as a voice detection state and a lip movement detection state, may be predefined, the voice detection state may further include a voiced state and a voiceless state, and the lip movement detection state may further include a lip movement state and a lip-movement-free state.

The voiced state is a state in a time after the voice start point is detected and before the corresponding voice end point is detected; the voiceless state is a state in a time other than the voiced state, i.e., a state in a time before the voice start point is detected and after the voice end point is detected; the lip movement state is a state in a time after the lip movement start point is detected and before the corresponding lip movement end point is detected; and the lip-movement-free state is a state in a time other than the lip movement state, i.e., a state in a time before the lip movement start point is detected and after the lip movement end point is detected.

Correspondingly, in an embodiment of the present disclosure, when the voice detection state is the voiced state and the lip movement detection state is the lip-movement-free state, if the lip movement start point is detected and meets a predefined time requirement, the correcting module 704 may use the detected lip movement start point as a determined voice end point and a new voice start point.

In an embodiment of the present disclosure, the meeting of the predefined time requirement may mean that a difference between the time when the lip movement start point is detected and the time when the voice start point is last detected is greater than a predefined threshold.

That is, when the voice detection state is the voiced state and the lip movement detection state is the lip-movement-free state, if the lip movement start point is detected, the difference between the time when the lip movement start point is detected and the time when the voice start point (i.e., the voice start point corresponding to the current voiced state) is last detected is greater than the predefined threshold may be further determined, if yes, the lip movement start point may be determined to meet the predefined time requirement, and correspondingly, the detected lip movement start point may be used as the determined voice end point and the new voice start point. That is, forced segmentation may be performed, and the detected lip movement start point is used as the voice end point corresponding to the last detected voice start point and the new voice start point.

In an embodiment of the present disclosure, when the voice detection state is the voiced state and the lip movement detection state is the lip movement state, if the lip movement end point is detected, the correcting module 704 may further use the detected lip movement end point as the determined voice end point and the new voice start point.

That is, forced segmentation may be performed, and the detected lip movement end point is used as the voice end point corresponding to the newly obtained voice start point and the new voice start point.

In an embodiment of the present disclosure, the second detecting module 703 may further perform the second detection on the video data when the face lips in the video are determined not to be occluded. That is, when the face lips in the video are determined to be occluded, for example, due to wear of a mask, the second detection may not be performed; that is, only the first detection is performed, and the first detection result is used as the voice activity detection result,

For the specific work flow of the embodiment of the apparatus shown in Fig. 7, reference is made to the related description in the foregoing embodiment of the method, and details are not repeated.

In conclusion, in the solution of the apparatus according to the embodiment of the present disclosure, the voice detection model and a lip movement detection technology are combined, and the voice start point and the voice end point detected by the voice detection model are corrected using the lip movement detection result, thereby improving accuracy of the voice activity detection result, or the like.

The solution of the present disclosure may be applied to the field of artificial intelligence, and particularly relates to the fields of deep learning, intelligent voices, or the like.

Artificial intelligence is a subject of researching how to cause a computer to simulate certain thought processes and intelligent behaviors (for example, learning, inferring, thinking, planning, or the like) of a human, and includes both hardware-level technologies and software-level technologies. Generally, the hardware technologies of the artificial intelligence include technologies, such as a sensor, a dedicated artificial intelligence chip, cloud computing, distributed storage, big data processing, or the like; the software technologies of the artificial intelligence mainly include a computer vision technology, a voice recognition technology, a natural language processing technology, a machine learning/deep learning technology, a big data processing technology, a knowledge graph technology, or the like.

According to the embodiment of the present disclosure, there are also provided an electronic device, a readable storage medium and a computer program product.

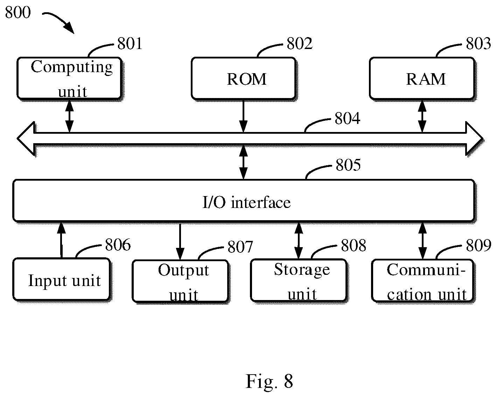

Fig. 8 shows a schematic block diagram of an exemplary electronic device 800 which may be configured to implement the embodiment of the present disclosure. The electronic device is intended to represent various forms of digital computers, such as laptop computers, desktop computers, workstations, servers, blade servers, mainframe computers, and other appropriate computers. The electronic device may also represent various forms of mobile apparatuses, such as personal digital assistants, cellular telephones, smart phones, wearable devices, and other similar computing apparatuses. The components shown herein, their connections and relationships, and their functions, are meant to be exemplary only, and are not meant to limit implementation of the present disclosure described and/or claimed herein.

As shown in Fig. 8, the device 800 includes a computing unit 801 which may perform various appropriate actions and processing operations according to a computer program stored in a read only memory (ROM) 802 or a computer program loaded from a storage unit 808 into a random access memory (RAM) 803. Various programs and data necessary for the operation of the device 800 may be also stored in the RAM 803. The computing unit 801, the ROM 802, and the RAM 803 are connected with one other through a bus 804. An input/output (I/O) interface 805 is also connected to the bus 804.

The plural components in the device 800 are connected to the I/O interface 805, and include: an input unit 806, such as a keyboard, a mouse, or the like; an output unit 807, such as various types of displays, speakers, or the like; the storage unit 808, such as a magnetic disk, an optical disk, or the like; and a communication unit 809, such as a network card, a modem, a wireless communication transceiver, or the like. The communication unit 809 allows the device 800 to exchange information/data with other devices through a computer network, such as the Internet, and/or various telecommunication networks.

The computing unit 801 may be a variety of general and/or special purpose processing components with processing and computing capabilities. Some examples of the computing unit 801 include, but are not limited to, a central processing unit (CPU), a graphic processing unit (GPU), various dedicated artificial intelligence (AI) computing chips, various computing units running machine learning model algorithms, a digital signal processor (DSP), and any suitable processor, controller, microcontroller, or the like. The computing unit 801 performs the methods and processing operations described above, such as the method according to the present disclosure. For example, in some embodiments, the method according to the present disclosure may be implemented as a computer software program tangibly contained in a machine readable medium, such as the storage unit 808. In some embodiments, part or all of the computer program may be loaded and/or installed into the device 800 via the ROM 802 and/or the communication unit 809. When the computer program is loaded into the RAM 803 and executed by the computing unit 801, one or more steps of the method according to the present disclosure may be performed. Alternatively, in other embodiments, the computing unit 801 may be configured to perform the method according to the present disclosure by any other suitable means (for example, by means of firmware).

Various implementations of the systems and technologies described herein above may be implemented in digital electronic circuitry, integrated circuitry, field programmable gate arrays (FPGA), application specific integrated circuits (ASIC), application specific standard products (ASSP), systems on chips (SOC), complex programmable logic devices (CPLD), computer hardware, firmware, software, and/or combinations thereof. The systems and technologies may be implemented in one or more computer programs which are executable and/or interpretable on a programmable system including at least one programmable processor, and the programmable processor may be special or general, and may receive data and instructions from, and transmit data and instructions to, a storage system, at least one input apparatus, and at least one output apparatus.

Program codes for implementing the method according to the present disclosure may be written in any combination of one or more programming languages. These program codes may be provided to a processor or a controller of a general purpose computer, a special purpose computer, or other programmable data processing apparatuses, such that the program code, when executed by the processor or the controller, causes functions/operations specified in the flowchart and/or the block diagram to be implemented. The program code may be executed entirely on a machine, partly on a machine, partly on a machine as a stand-alone software package and partly on a remote machine, or entirely on a remote machine or a server.

In the context of the present disclosure, the machine readable medium may be a tangible medium which may contain or store a program for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, a portable computer disk, a hard disk, a random access memory (RAM), a read only memory (ROM), an erasable programmable read only memory (EPROM or flash memory), an optical fiber, a portable compact disc read only memory (CD-ROM), an optical storage device, a magnetic storage device, or any suitable combination of the foregoing.

To provide interaction with a user, the systems and technologies described here may be implemented on a computer having: a display apparatus (for example, a cathode ray tube (CRT) or liquid crystal display (LCD) monitor) for displaying information to a user; and a keyboard and a pointing apparatus (for example, a mouse or a trackball) by which a user may provide input for the computer. Other kinds of apparatuses may also be used to provide interaction with a user; for example, feedback provided for a user may be any form of sensory feedback (for example, visual feedback, auditory feedback, or tactile feedback); and input from a user may be received in any form (including acoustic, speech or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network (LAN), a wide area network (WAN) and the Internet.

A computer system may include a client and a server. Generally, the client and the server are remote from each other and interact through the communication network. The relationship between the client and the server is generated by virtue of computer programs which run on respective computers and have a client-server relationship to each other. The server may be a cloud server, also called a cloud computing server or a cloud host, and is a host product in a cloud computing service system, so as to overcome the defects of high management difficulty and weak service expansibility in conventional physical host and virtual private server (VPS) service. The server may also be a server of a distributed system, or a server incorporating a blockchain. The cloud computing technology is a technical system in which an elastically extensible shared physical or virtual resource pool is accessed through a network, resources may include servers, operating systems, networks, software, applications, storage devices, or the like, and the resources may be deployed and managed in a self-service mode according to needs; the cloud computing technology may provide an efficient and powerful data processing capacity for technical applications and model training of artificial intelligence, blockchains, or the like.

It should be understood that various forms of the flows shown above may be used and reordered, and steps may be added or deleted. For example, the steps described in the present disclosure may be executed in parallel, sequentially, or in different orders, which is not limited herein as long as the desired results of the technical solution disclosed in the present disclosure may be achieved.

## Claims

1. A method for voice activity detection, **characterized by** comprising:
acquiring (101) time-aligned voice data and video data;
performing (102) a first detection of a voice start point and a voice end point of the voice data using a voice detection model obtained by a training operation;
performing (103) a second detection of a lip movement start point and a lip movement end point of the video data; and
correcting (104) a result of the first detection using a result of the second detection, and taking (104) a corrected result as a voice activity detection result,
**characterized in that**
the correcting a result of the first detection using a second detection result comprises:
when a voice detection state is a voiced state and a lip movement detection state is a lip-movement-free state, if the lip movement start point is detected and a difference between a time when the lip movement start point is detected and a time when the voice start point is last detected is greater than a predefined threshold, using the detected lip movement start point as a determined voice end point and a new voice start point, wherein the voiced state is a state in a time after the voice start point is detected and before the corresponding voice end point is detected; the lip-movement-free state is a state in a time other than a lip movement state; and
the lip movement state is a state in a time after the lip movement start point is detected and before the corresponding lip movement end point is detected.

2. The method according to claim 1, wherein the performing a second detection of a lip movement start point and a lip movement end point of the video data comprises:
performing the second detection on the video data using a lip movement detection model obtained by a training operation, so as to obtain the lip movement start point and the lip movement end point of the face in the video data.

3. The method according to claim 1, wherein the correcting a result of the first detection using a result of the second detection comprises:
when the voice detection state is the voiced state and the lip movement detection state is the lip movement state, if the lip movement end point is detected, using the detected lip movement end point as the determined voice end point and the new voice start point.

4. An apparatus (700) for voice activity detection, comprising:
an acquiring module (701) configured to acquire time-aligned voice data and video data;
a first detecting module (702) configured to perform a first detection of a voice start point and a voice end point of the voice data using a voice detection model obtained by a training operation;
a second detecting module (703) configured to perform a second detection of a lip movement start point and a lip movement end point of the video data; and
a correcting module (704) configured to correct a result of the first detection result using a result of the second detection, and take a corrected result as a voice activity detection result,
**characterized in that**
when a voice detection state is a voiced state and a lip movement detection state is a lip-movement-free state, if the lip movement start point is detected and a difference between a time when the lip movement start point is detected and a time when the voice start point is last detected is greater than a predefined threshold, the correcting module (704) uses the detected lip movement start point as a determined voice end point and a new voice start point;
wherein the voiced state is a state in a time after the voice start point is detected and before the corresponding voice end point is detected; the lip-movement-free state is a state in a time other than a lip movement state; and
the lip movement state is a state in a time after the lip movement start point is detected and before the corresponding lip movement end point is detected.

5. The apparatus (700) according to claim 4,
wherein the second detecting module (703) performs the second detection on the video data using a lip movement detection model obtained by a training operation, so as to obtain the lip movement start point and the lip movement end point of the face in the video data.

6. The apparatus (700) according to claim 4,
when the voice detection state is the voiced state and the lip movement detection state is the lip movement state, if the lip movement end point is detected, the correcting module (704) uses the detected lip movement end point as the determined voice end point and the new voice start point.

7. A non-transitory computer readable storage medium storing computer instructions for causing a computer to perform the method according to any one of claims 1 to 3.

8. A computer program product comprising a computer program which, when executed by a processor, implements the method according to any one of claims 1 to3.

## Patentansprüche

1. Verfahren zur Erkennung von Sprachaktivität, **dadurch gekennzeichnet, dass** das Verfahren umfasst:
Erfassen (101) von zeitlich abgestimmten Sprachdaten und Videodaten;
Durchführen (102) einer ersten Erkennung eines Sprachstartpunkts und eines Sprachendpunkts der Sprachdaten mittels eines Spracherkennungsmodells, das durch einen Trainingsvorgang erhalten wird;
Durchführen (103) einer zweiten Erkennung eines Lippenbewegungsstartpunkts und eines Lippenbewegungsendpunkts der Videodaten; und
Korrigieren (104) eines Ergebnisses der ersten Erkennung mittels eines Ergebnisses der zweiten Erkennung, und Verwenden (104) eines korrigierten Ergebnisses als ein Erkennungsergebnis der Sprachaktivität,
**dadurch gekennzeichnet, dass**
das Korrigieren eines Ergebnisses der ersten Erkennung mittels eines zweiten Erkennungsergebnisses umfasst:
wenn ein Spracherkennungszustand ein stimmhafter Zustand ist und ein Lippenbewegungserkennungszustand ein lippenbewegungsfreier Zustand ist, sofern der Lippenbewegungsstartpunkt erkannt wird und eine Differenz zwischen einem Zeitpunkt, zu dem der Lippenbewegungsstartpunkt erkannt wird, und einem Zeitpunkt, zu dem der Sprachstartpunkt zuletzt erkannt wird, größer als ein vordefinierter Schwellenwert ist, Verwenden des erkannten Lippenbewegungsstartpunkts als einen bestimmten Sprachendpunkt und einen neuen Sprachstartpunkt, wobei der stimmhafte Zustand ein Zustand zu einem Zeitpunkt nach Erkennung des Sprachstartpunkts und vor Erkennung des entsprechenden Sprachendpunkts ist; wobei der lippenbewegungsfreie Zustand ein Zustand zu einem anderen Zeitpunkt als der Lippenbewegungszustand ist; und wobei der Lippenbewegungszustand ein Zustand zu einem Zeitpunkt nach Erkennung des Lippenbewegungsstartpunkts und vor Erkennung des entsprechenden Lippenbewegungsendpunkts ist.

2. Verfahren nach Anspruch 1, wobei das Durchführen einer zweiten Erkennung eines Lippenbewegungsstartpunkts und eines Lippenbewegungsendpunkts der Videodaten umfasst:
Durchführen der zweiten Erkennung an den Videodaten mittels eines Lippenbewegungserkennungsmodells, das durch einen Trainingsvorgang erhalten wird, um den Lippenbewegungsstartpunkt und den Lippenbewegungsendpunkt des Gesichts in den Videodaten zu erhalten.

3. Verfahren nach Anspruch 1, wobei das Korrigieren eines Ergebnisses der ersten Erkennung mittels eines Ergebnisses der zweiten Erkennung umfasst: wenn der Spracherkennungszustand der stimmhafte Zustand ist und der Lippenbewegungserkennungszustand der Lippenbewegungszustand ist, sofern der Lippenbewegungsendpunkt erkannt wird, Verwenden des erkannten Lippenbewegungsendpunkts als den bestimmten Sprachendpunkt und den neuen Sprachstartpunkt.

4. Vorrichtung (700) zur Erkennung von Sprachaktivität, die aufweist:
ein Erfassungsmodul (701), das dazu ausgebildet ist, zeitlich abgestimmte Sprachdaten und Videodaten zu erfassen;
ein erstes Erkennungsmodul (702), das dazu ausgebildet ist, eine erste Erkennung eines Sprachstartpunkts und eines Sprachendpunkts der Sprachdaten mittels eines Spracherkennungsmodells durchzuführen, das durch einen Trainingsvorgang erhalten wird;
ein zweites Erkennungsmodul (703), das dazu ausgebildet ist, eine zweite Erkennung eines Lippenbewegungsstartpunkts und eines Lippenbewegungsendpunkts der Videodaten durchzuführen; und
ein Korrigiermodul (704), das dazu ausgebildet ist, ein Ergebnis des ersten Erkennungsergebnisses mittels eines Ergebnisses der zweiten Erkennung zu korrigieren, und ein korrigiertes Ergebnisses als ein Erkennungsergebnis der Sprachaktivität zu verwenden,
**dadurch gekennzeichnet, dass**
wenn ein Spracherkennungszustand ein stimmhafter Zustand ist und ein Lippenbewegungserkennungszustand ein lippenbewegungsfreier Zustand ist, sofern der Lippenbewegungsstartpunkt erkannt wird und eine Differenz zwischen einem Zeitpunkt, zu dem der Lippenbewegungsstartpunkt erkannt wird, und einem Zeitpunkt, zu dem der Sprachstartpunkt zuletzt erkannt wird, größer als ein vordefinierter Schwellenwert ist, das Korrigiermodul (704) den erkannten Lippenbewegungsstartpunkt als einen bestimmten Sprachendpunkt und einen neuen Sprachstartpunkt verwendet;
wobei der stimmhafte Zustand ein Zustand zu einem Zeitpunkt nach Erkennung des Sprachstartpunkts und vor Erkennung des entsprechenden Sprachendpunkts ist; wobei der lippenbewegungsfreie Zustand ein Zustand zu einem anderen Zeitpunkt als der Lippenbewegungszustand ist; und wobei der Lippenbewegungszustand ein Zustand zu einem Zeitpunkt nach Erkennung des Lippenbewegungsstartpunkts und vor Erkennung des entsprechenden Lippenbewegungsendpunkts ist.

5. Vorrichtung (700) nach Anspruch 4, wobei das zweite Erkennungsmodul (703) die zweite Erkennung an den Videodaten mittels eines Lippenbewegungserkennungsmodells durchführt, das durch einen Trainingsvorgang erhalten wird, um den Lippenbewegungsstartpunkt und den Lippenbewegungsendpunkt des Gesichts in den Videodaten zu erhalten.

6. Vorrichtung (700) nach Anspruch 4, wobei, wenn der Spracherkennungszustand der stimmhafte Zustand ist und der Lippenbewegungserkennungszustand der Lippenbewegungszustand ist, sofern der Lippenbewegungsendpunkt erkannt wird, das Korrigiermodul (704) den erkannten Lippenbewegungsendpunkt als den bestimmte Sprachendpunkt und den neuen Sprachstartpunkt verwendet.

7. Nichtflüchtiges computerlesbares Speichermedium, auf dem Computeranweisungen gespeichert sind, um zu bewirken, dass ein Computer das Verfahren nach einem der Ansprüche 1 bis 3 durchführt.

8. Computerprogrammprodukt, das ein Computerprogramm aufweist, das bei Ausführung durch einen Prozessor das Verfahren nach einem der Ansprüche 1 bis 3 durchführt.

## Revendications

1. Procédé de détection d'activité vocale, **caractérisé par** comprenant :
l'acquisition (101) de données vocales et de données vidéo alignées dans le temps ;
l'exécution (102) d'une première détection d'un point de départ de voix et d'un point de fin de voix des données vocales en utilisant un modèle de détection de voix obtenu par une opération d'entraînement ;
l'exécution (103) d'une seconde détection d'un point de départ de mouvement de lèvre et d'un point de fin de mouvement de lèvre des données vidéo ; et
la correction (104) d'un résultat de la première détection en utilisant un résultat de la seconde détection, et la prise (104) d'un résultat corrigé en tant que résultat de détection d'activité vocale,
**caractérisé en ce que** la correction d'un résultat de la première détection en utilisant un second résultat de détection comprend :
lorsqu'un état de détection de voix est un état de voix et un état de détection de mouvement de lèvre est un état sans mouvement de lèvre, si le point de départ de mouvement de lèvre est détecté et une différence entre un moment où le point de départ de mouvement de lèvre est détecté et un moment où le point de départ de voix est en dernier détecté est supérieur à un seuil prédéfini, utiliser le point de départ de mouvement de lèvre détecté comme un point de fin de voix déterminé et un nouveau point de départ de voix,
dans lequel l'état de voix est un état dans un moment après que le point de départ de voix est détecté et avant que le point de fin de voix correspondant ne soit détecté ; l'état sans mouvement de lèvre est un état dans un moment autre qu'un état de mouvement de la lèvre ; et
l'état de mouvement de lèvre est un état dans un moment après que le point de départ de mouvement de lèvre est détecté et avant que le point de fin de mouvement de lèvre correspondant ne soit détecté.

2. Procédé selon la revendication 1, dans lequel l'exécution d'une seconde détection d'un point de départ de mouvement de lèvre et d'un point de fin de mouvement de lèvre des données vidéo comprend :
l'exécution de la seconde détection sur les données vidéo en utilisant un modèle de détection de mouvement de lèvre obtenu par une opération d'entraînement, de manière à obtenir le point de départ de mouvement de lèvre et le point de fin de mouvement de lèvre du visage dans les données vidéo.

3. Procédé selon la revendication 1, dans lequel la correction d'un résultat de la première détection en utilisant un résultat de la seconde détection comprend :
lorsque l'état de détection de voix est l'état de voix et l'état de détection de mouvement de lèvre est l'état de mouvement de lèvre, si le point de fin de mouvement de lèvre est détecté, l'utilisation du point de fin de mouvement de lèvre détecté comme point de fin de voix déterminé et le nouveau point de départ de voix.

4. Appareil (700) de détection d'activité vocale, comprenant :
un module d'acquisition (701) configuré pour acquérir des données vocales et des données vidéo alignées dans le temps ;
un premier module de détection (702) configuré pour effectuer une première détection d'un point de départ de voix et d'un point de fin de voix des données vocales en utilisant un modèle de détection de voix obtenu par une opération d'entraînement ;
un second module de détection (703) configuré pour effectuer une seconde détection d'un point de départ de mouvement de lèvre et d'un point de fin de mouvement de lèvre des données vidéo ; et
un module de correction (704) configuré pour corriger un résultat du premier résultat de détection en utilisant un résultat de la seconde détection, et prendre un résultat corrigé en tant que résultat de détection d'activité vocale,
**caractérisé en ce que** lorsqu'un état de détection de voix est un état de voix et un état de détection de mouvement de lèvre est un état sans mouvement de lèvre, si le point de départ de mouvement de lèvre est détecté et une différence entre un moment où le point de départ de mouvement de lèvre est détecté et un moment où le point de départ de voix est en dernier détecté est supérieur à un seuil prédéfini, le module de correction (704) utilise le point de départ de mouvement de lèvre détecté comme un point de fin de voix déterminé et un nouveau point de départ de voix ;
dans lequel l'état de voix est un état dans un moment après que le point de départ de voix est détecté et avant que le point de fin de voix correspondant ne soit détecté ; l'état sans mouvement de lèvre est un état dans un moment autre qu'un état de mouvement de la lèvre ; et
l'état de mouvement de lèvre est un état dans un moment après que le point de départ de mouvement de lèvre est détecté et avant que le point de fin de mouvement de lèvre correspondant ne soit détecté.

5. Appareil (700) selon la revendication 4,
dans lequel le second module de détection (703) exécute la seconde détection sur les données vidéo en utilisant un modèle de détection de mouvement de lèvre obtenu par une opération d'entraînement, de manière à obtenir le point de départ de mouvement de lèvre et le point de fin de mouvement de lèvre du visage dans les données vidéo.

6. Appareil (700) selon la revendication 4,
lorsque l'état de détection de voix est l'état de voix et l'état de détection de mouvement de lèvre est l'état de mouvement de lèvre, si le point de fin de mouvement de lèvre est détecté, le module de correction (704) utilise le point de fin de mouvement de lèvre détecté comme point de fin de voix déterminé et le nouveau point de départ de voix.

7. Support de stockage non transitoire lisible par ordinateur stockant des instructions d'ordinateur pour amener un ordinateur à exécuter le procédé selon l'une quelconque des revendications 1 à 3.

8. . Produit programme d'ordinateur comprenant un programme d'ordinateur qui, lorsqu'il est exécuté par un processeur, met en oeuvre le procédé selon l'une quelconque des revendications 1 à 3.
